# EUROPEAN PATENT SPECIFICATION

(11) **EP 3 016 300 B1**
(45) Date of publication and mention of the grant of the patent: **28.02.2018**
(21) Application number: 15191389.4
(22) Date of filing: 26.10.2015
(51) Int. Cl.: H04B 7/185

(54) **INDOOR SATELLITE COMMUNICATION**
INNEN-SATELLITENKOMMUNIKATION
COMMUNICATION SATELLITE INTÉRIEURE

(30) Priority: 30.10.2014 IL 23541614
(43) Date of publication of application: 04.05.2016
(73) Proprietor: Gilat Telecom Ltd., 4913020 Petach-Tikva (IL)
(72) Inventor: GUREWITZ, Aaron, 4654101 Herzlia (IL)
(74) Representative: Dennemeyer & Associates S.A.

(56) References cited:
- WO-A1-03/041412
- US-A- 5 912 641
- US-A1- 2003 190 902

## Description

### BACKGROUND

The present invention, in some embodiments thereof, relates to a satellite communication and, more specifically, but not exclusively, to relaying satellite communication signals from a vehicle when direct view of a geostationary satellite is obstructed.

Communication satellites are used for a variety of mobile applications such as communication with ships, planes, handheld terminals, and the like, referred to herein as vehicles. These vehicles have a mobile satellite transceiver terminal that sends signals to and receives signals from the communication satellite to allow bidirectional transfer of voice signals, data, and the like. The communications are performed using an electromagnetic radiation in a dedicated frequency range, referred to herein as a band. For example, the Ku-band of satellite communication frequencies is a portion of the microwave frequency spectrum in the range of 10-15 Gigahertz that is used for satellite communications. The communication satellites are in a geosynchronous orbit so their position is known and the vehicle satellite transceiver uses a steerable microwave antenna to track the location of the as the vehicle moves relative to the satellite. The communications satellites relay the signals from the vehicle transceiver to the second entity participating in the communication, for example a second party of a phone conversation or a server for data transfer.

U.S Patent Number 5.912.641 teaches a satellite repeater system (10) that provides a connection from satellites (12) to user terminals (14) that are located within a building. The satellite cellular repeater system receives satellite signals on a satellite receive antenna (18) and retransmits the received signal within a building using amplifiers (30) and indoor antennas (32). The system also receives signals from a user terminal, amplifies the signals, and retransmits the user terminal signals with an outdoor satellite antenna (20) back to a satellite. For a multi-story building each floor may be provided with a local transmit antenna (32), transmit amplifier (30), receive antenna (34), and receive amplifier (36) for conducting bidirectional communications with satellite telephones or user terminals that are present on that floor. The satellite signal repeater system employs an outdoor satellite receive antenna structure that tracks non-geosynchronous orbiting satellites as they move with respect to the outdoor satellite receive antenna, and thus provides system selectivity so as to minimize interference from and into other communications systems that may operate in the same frequency band(s).

US Patent Pub. No US 2003/0190902 teaches a receiving antenna system includes an antenna unit, a receiver unit, a dmvn converter and a DC power/control supply. The antenna unit includes a parabolic reflector, a feed horn and an orthomode transducer, which are configured to capture, isolate, and output respective first and second polarized RF signals. The receiver unit is coupled to the antenna unit and is configured to amplify the respective RF signals and output a selected one of the respective amplified RF signals in response to a DC control signal. The down converter is coupled to the receiver unit via a transmission line and is configured to further amplify, down convert and output the selected amplified RF signal as an intermediate signal. The DC power/control supply is coupled to the receiver unit via the same transmission and is configured to produce a power/control signal that is transmitted over the same transmission line in which the selected amplified RF signal is transmitted, thereby providing power and control to the receiver unit.

### SUMMARY

According to some embodiments of the present invention there is provided a system for obstructed satellite communication. The system comprises an outdoor satellite antenna (107) adapted to be positioned and oriented to have a direct satellite view with a geosynchronous satellite and to receive and transmit an electromagnetic satellite signal from/to the geosynchronous satellite, wherein the outdoor satellite antenna is directed towards the geosynchronous satellite along a line of sight, at least one directional antenna (103) adapted to be positioned inside an obstructing structure and receive and transmit an obstructed electromagnetic signal, wherein the at least one directional antenna comprises a feedhorn, position and/or orientation adjusters (102) (104) adapted to move the feedhorn of the at least one directional antenna (103) toward a vehicle antenna (132) within the obstructing structure to be parallel to
the line of sight, and relay amplifier device (101) adapted to send and receive the electromagnetic satellite signal and the obstructed electromagnetic signal between respective the outdoor satellite antenna and the at least one directional antenna. The
electromagnetic satellite signal and the obstructed electromagnetic signal have the same frequency. The obstructing structure prevents the electromagnetic satellite signal from being received at an obstructed location within the obstructing structure and prevents the obstructed electromagnetic signal originating at the obstructed location from being received by the geosynchronous satellite.

Optionally, the at least one directional antenna comprises a plurality of antennas positioned in an array, and a signal splitter electronic device electronically connects the plurality of antennas to the relay amplifier device.

Optionally, the at least one directional antenna comprises a plurality of antennas positioned in an array, and a signal combiner electronic device electronically connects the plurality of antennas to the relay amplifier device.

Optionally, the feedhorn is attached to an orienting base and the orienting base modifies an orientation of the feedhorn to direct the feedhorn towards location on a far side of the obstructing structure away from the geosynchronous satellite.

Optionally, the at least one directional antenna is attached to a positioning subunit, and the positioning subunit modifies a location of the at least one directional antenna to a position between a mobile satellite transceiver terminal and the geosynchronous satellite.

Optionally, the obstructed electromagnetic signal comprises a transmission signal polarized horizontally and a reception signal polarized vertically, and the relay amplifier transmits and receives the electromagnetic satellite signal with a same polarization.

Optionally, the obstructed electromagnetic signal comprises a transmission signal polarized vertically and a reception signal polarized horizontally, and the relay amplifier transmits and receives the electromagnetic satellite signal with a same polarization.

Optionally, the at least one directional antenna receives any polarization using a hybrid coupler, and the any polarization is electronically oriented to match a steerable antenna of a mobile satellite transceiver terminal.

Optionally, the frequency is a Ku-band frequency in the range of 10-15 gigahertz portion of the electromagnetic spectrum and in the microwave range of frequencies.

Optionally, the system comprises a testing transceiver for testing system operation by establishing a communication link using at least one component of the system, wherein the communication link is between the testing transceiver and the geosynchronous satellite or between the testing transceiver and a second transceiver located at the obstructed location.

Optionally, the relay amplifier has at least one of a configurable gain for each channel and an automatically adjusted gain for each channel so that the electromagnetic satellite signal has a same signal strength as the obstructed electromagnetic signal.

Optionally, the system comprises an orthomode transducer (302) connected to the feedhorn for receiving a bidirectional electromagnetic radiation signal from the vehicle.

More optionally, the bidirectional electromagnetic radiation signal comprises at least one of: (1) a horizontally polarized transmission signal and a vertically polarized reception signal and (2) a vertically polarized transmission signal and a horizontally polarized reception signal.

According to some embodiments of the present invention there is provided a method for using a system for obstructed satellite communication for obstructed satellite communication. The method comprises receiving and transmitting by an outdoor satellite antenna (107) adapted to be positioned and oriented to have a direct satellite view with a geosynchronous satellite an electromagnetic satellite signal from/to the geosynchronous satellite, wherein the outdoor satellite antenna is directed towards the geosynchronous satellite along a line of sight, moving by position and/or orientation adjusters (102) (104) at least a feedhorn of at least one directional antenna (103) positioned inside the obstructing structure toward a vehicle antenna (132) within an obstructing structure to be parallel to said line of sight, receiving and transmitting an obstructed electromagnetic signal by the at least one directional antenna (103), and sending and receiving the electromagnetic satellite signal and the obstructed electromagnetic signal between respective the outdoor satellite antenna and the at least one directional antenna by a relay amplifier device (101). The electromagnetic satellite signal and the obstructed electromagnetic signal have the same frequency. The obstructing structure prevents the electromagnetic satellite signal from being received at an obstructed location within the obstructing structure and prevents the obstructed electromagnetic signal originating at the obstructed location from being received by the geosynchronous satellite.

Unless otherwise defined, all technical and/or scientific terms used herein have the same meaning as commonly understood by one of ordinary skill in the art to which the invention pertains. Although methods and materials similar or equivalent to those described herein can be used in the practice or testing of embodiments of the invention, exemplary methods and/or materials are described below. In case of conflict, the patent specification, including definitions, will control. In addition, the materials, methods, and examples are illustrative only and are not intended to be necessarily limiting.

Implementation of the method and/or system of embodiments of the invention may involve performing or completing selected tasks manually, automatically, or a combination thereof. Moreover, according to actual instrumentation and equipment of embodiments of the method and/or system of the invention, several selected tasks could be implemented by hardware, by software or by firmware or by a combination thereof using an operating system .

For example, hardware for performing selected tasks according to embodiments of the invention could be implemented as a chip or a circuit. As software, selected tasks according to embodiments of the invention could be implemented as a plurality of software instructions being executed by a computer using any suitable operating system. In an exemplary embodiment of the invention, one or more tasks according to exemplary embodiments of method and/or system as described herein are performed by a data processor, such as a computing platform for executing a plurality of instructions. Optionally, the data processor includes a volatile memory for storing instructions and/or data and/or a non-volatile storage, for example, a magnetic hard-disk and/or removable media, for storing instructions and/or data. Optionally, a network connection is provided as well. A display and/or a user input device such as a keyboard or mouse are optionally provided as well.

### BRIEF DESCRIPTION OF THE SEVERAL VIEWS OF THE DRAWINGS

Some embodiments of the invention are herein described, by way of example only, with reference to the accompanying drawings. With specific reference now to the drawings in detail, it is stressed that the particulars shown are by way of example and for purposes of illustrative discussion of embodiments of the invention. In this regard, the description taken with the drawings makes apparent to those skilled in the art how embodiments of the invention may be practiced.

In the drawings:
FIG. 1 is a schematic illustration of a system for establishing a bidirectional satellite link between a satellite and satellite communication equipment located indoors, according to some embodiments of the invention;
FIG. 2 is a flowchart of a method to relay an indoor radio frequency signal transmission from a satellite communication equipment to a satellite and to relay an outdoor radio frequency signal transmission from the satellite to the satellite communication equipment, according to some embodiments of the invention;
FIG. 3 is a schematic illustration of the details of an exemplary indoor antenna for establishing a bidirectional satellite link with indoor satellite communication equipment, according to some embodiments of the invention; and
FIG. 4 is a schematic illustration of a block diagram details of a relay amplifier for establishing a bidirectional satellite link with indoor satellite communication equipment, according to some embodiments of the invention.

### DETAILED DESCRIPTION

The present invention, in some embodiments thereof, relates to a satellite communication and, more specifically, but not exclusively, to relaying satellite communication signals from a vehicle when direct view of a geostationary satellite is obstructed.

For satellite communication between a mobile transceiver, such as a transceiver mounted on a vehicle, and a geosynchronous satellite, the steerable antenna connected to the transceiver must have line of sight with the satellite. Many vehicle and mobile transceivers are operated and/or tested within hangers, buildings, underground, and the like, and the transceiver operator must wait until the vehicle has exited the structure blocking the communication signals before they can use and/or test the satellite transceiver. This causes delays when first exiting the structure to establish the satellite communication signals and receive guidance and/or approval to proceed from a control tower and the like. Operation of these vehicles can be expensive both in direct operational expenses such as fuel costs and indirect costs such as reserving a location for a staging area to establish communication signals and the vehicle staff time during the time period for waiting to proceed.

According to some embodiments of the present invention there is provided a system and method for relaying satellite communication signals between a mobile satellite transceiver and a communication satellite transponder when direct line of sight between the transceiver and satellite is obstructed by a physical element, such as a roof, a cover, a structure, a top, and the like. A system comprises an outdoor satellite antenna directed at the geostationary communication satellite, one or more indoor antennas, and a relaying amplifier. The outdoor antenna, indoor antenna, and relaying amplifier operate at the same Ku-band frequency as the vehicle transceiver and the communications satellite, so that a user in the vehicle may establish communication signals when the satellite is physically obstructed and/or attenuated by a physical element. Optionally, the communication link continues without interruption when direct communication with the satellite is possible, such as when the vehicle exits the physical element obstructing communication signals, for example when an airplane leaves a hangar. The indoor antenna comprises a feedhorn that allows directional transmission and reception of microwave signals. The feedhorn is mounted on the far side of the obstruction from the satellite, so that the angle of the feedhorn mimics a transmission originated from the geostationary satellite to a transceiver located on the vehicle. For example, the feedhorn is mounted at a fixed angle towards a location within the structure where the vehicle will be positioned for maintenance, on the far side of the physical obstruction. For example, the feedhorn and/or indoor antenna is mounted on a steerable base that directs the feedhorn towards the vehicle, parallel to a line of sight to and opposite in direction from the geosynchronous satellite. The feedhorn and/or indoor antenna may be mounted on a moveable platform attached to the roof of the structure on the obstructed side of the structure that positions the feedhorn along a line between the vehicle and the satellite. For clarity, the obstructed side of the physical element is the same side as the vehicle, located on the far side of the obstructing structure from the geosynchronous satellite. Thus, the vehicle transceiver is send and receives electromagnetic signals with the feedhorn, which mimics communication signals as from the satellite while inside the obstructing structure. When the vehicle exits the obstructing structure, the communication link is continued without interruption by communicating signals directly with the satellite.

Optionally, an array of feedhorns and/or indoor antennas is positioned within the structure along the ceiling, and a signal splitter and/or signal combiner connects all feedhorns and/or antennas to the relay amplifier.

Before explaining at least one embodiment of the invention in detail, it is to be understood that the invention is not necessarily limited in its application to the details of construction and the arrangement of the components and/or methods set forth in the following description and/or illustrated in the drawings and/or the Examples. The invention is capable of other embodiments or of being practiced or carried out in various ways.

The present invention may be a system, an apparatus, a device, a process and/or a method.

Aspects of the present invention are described herein with reference to flowchart illustrations and/or block diagrams of methods, apparatus, and systems according to embodiments of the invention. It will be understood that each block of the flowchart illustrations and/or block diagrams, and combinations of blocks in the flowchart illustrations and/or block diagrams, can be implemented by computer readable program instructions.

The flowchart and block diagrams in the Figures illustrate the architecture, functionality, and operation of possible implementations of systems, methods, and devices according to various embodiments of the present invention. In this regard, each block in the flowchart or block diagrams may represent a module, segment, or portion of instructions, which comprises one or more actions for implementing the specified logical function(s). In some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts or carry out combinations of special purpose hardware and computer instructions.

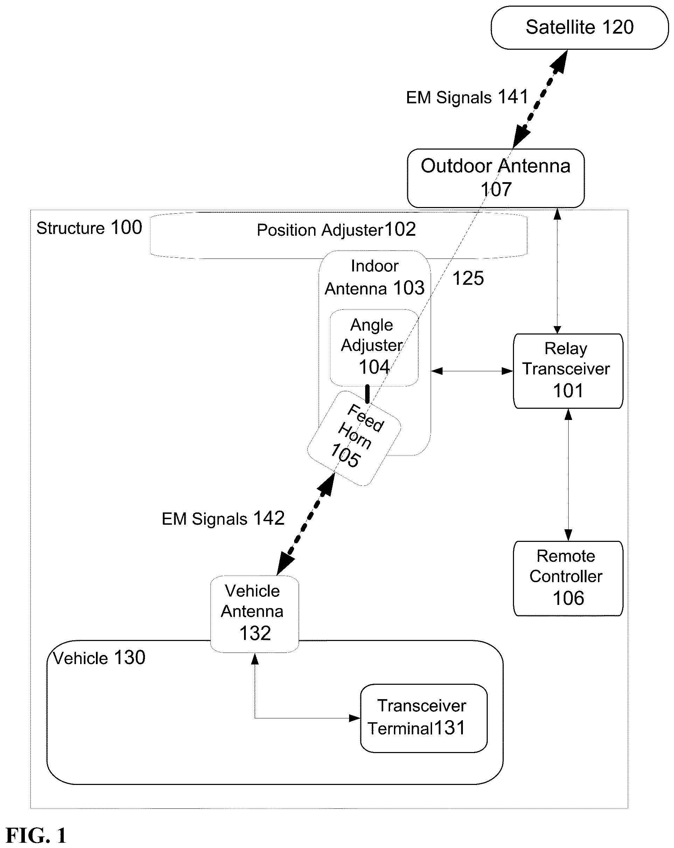

Reference is now made to FIG. 1, which is a schematic illustration of a system for indoor satellite communication using an indoor antenna and a relay amplifier to an outdoor antenna, according to some embodiments of the invention. The system comprises a relay amplifier 101, an outdoor antenna 107, and an indoor antenna 103. The outdoor antenna 107 is positioned and oriented to have direct satellite 120 view, such as on the roof of the structure 100. The feedhorn 105 of the indoor antenna 103 is positioned parallel to the line 125 of sight from the vehicle antenna 132 to the satellite 120, such as in a fixed position on the ceiling of the structure 100, and oriented to face away from the geosynchronous satellite 132, which may be a fixed position such as a staging area. As the geosynchronous satellite is very far away from the obstructing physical structure, the vehicle, the outdoor antenna, the indoor antenna, and like nearby objects, the lines of site between these objects and the satellite are parallel to each other. Optionally, the indoor antenna 103 has position 102 and/or orientation 104 adjusters to move the feedhorn to adapt to a range of vehicle antenna 132 locations within the structure 100, such that the feedhorn can follow a movement of the vehicle in the obstructing structure. For example, the position adjuster 102 comprises digitally controlled robotic motors to change the position of the indoor antenna 103. The relay amplifier 101 receives and sends signals along the transmission (TX) and reception (RX) channels of the indoor 103 and outdoor 107 antennas. The TX and RX signals may be sent and received separately, such as on separate channels. The vehicle transceiver 131 and attached steerable antenna 132 may be configured to communicate with the satellite 120, and establish communication signals (141 and 142), such as a communication link, before leaving the structure 100, saving time and costs.

The system is operational when a vehicle 130 is located within a structure 100 that obstructs direct sending and receiving communication signals with a geostationary satellite 120. As used herein, the term communication link and/or satellite communication refer to establishing bidirectional communication signals between a transceiver and a satellite, according to a defined protocol. For example, when a satellite transponder receives a communication signal sent by a transceiver, it will send a response signal comprising data to the transceiver to define and/or confirm the communication link with a second mobile transceiver. When operating, the system relays the electromagnetic (EM) signals 142 from the vehicle to the satellite 120 and back using a retransmission by the relay amplifier 101 of the vehicle EM signals 141 and satellite EM signals 142. For example, the EM signals 141 and 142 are microwave range signals and/or Ku-band signals. For example, the EM signals have a radiation frequency from 10 to 15 gigahertz.

Optionally, the system includes a remote controller 106 electronically connected to the relay amplifier 101, such as a computerized terminal, to monitor and/or control the relay amplifier 101 and/or system. Reference herein is made to some of the components of the system described in FIG. 1 as disclosed herein when describing the other aspects of embodiments of the invention, such as other illustrations. The specification will now describe the method used for establishing a communication link between a vehicle and/or mobile transceiver antenna 132 and a geostationary satellite 120 when the transceiver communication signal is obstructed by a structure.

For example, when a mobile transceiver has an incorporated GPS or other positioning device, the mobile transceiver 131 calculates the location of the geostationary satellite 120 and orients the steerable antenna 132 towards the satellite 120. If the vehicle is in a structure 100 obstructing the satellite 120, the feedhorn 105 may be positioned within the structure 100, such as on the ceiling where a line between the vehicle 130 and the satellite 120 meets the ceiling. Thus, the feedhorn 105 will be able to send and receive EM signals 141 with the mobile transceiver 131. As the steerable antenna 132 connected to the mobile transceiver 131 and the feedhorn 105 may each have a transmission beam angle, such as a 50 degree angle, the location of the feedhorn 105 can vary from this line in an amount depending on the height of the ceiling and this angle. When there is more than one vehicle maintenance location within the structure 100 there may be a feedhorn 105 for each location connected electronically in parallel with a signal splitter and/or combiner. Optionally, the feedhorn 105 is manually or automatically moveable to be at or near the correct location. Optionally, an array of feedhorns 105 can cover the ceiling, each at the correct orientation, and a vehicle can use the system from any location within the structure. This is feasible as the feedhorns and/or antennas are off the shelf components and low in cost.

For example, when a mobile transceiver 131 does not have an incorporated GPS or other positioning device and the mobile transceiver 131 cannot calculate the location of the geostationary satellite 120, the mobile transceiver 131 rotates the steerable antenna 132 to search for the satellite 120 signal. If the vehicle is in a structure 100 obstructing the satellite 120, a feedhorn 105 in the ceiling of the structure 100 may be orient towards the steerable antenna 132 and the relay amplifier 101 retransmit EM signals 142 from the satellite 120 towards the steerable antenna 132 and the steerable antenna 132 will orient towards the feedhorn. Thus, the feedhorn 105 will be able to send and receive EM signals 141 with the mobile transceiver 131. As the steerable antenna 132 connected to the mobile transceiver 131 and the feedhorn 105 may each have a transmission beam angle, such as a 50 degree angle, the orientation of the feedhorn 105 can vary from this orientation in an amount depending on the height of the ceiling and this angle. Optionally, a structure 100 has one or more feedhorns 105 at fixed orientations for GPS-enabled mobile transceivers 131 and one steerable feedhorn 105 for GPS-less mobile transceivers 131.

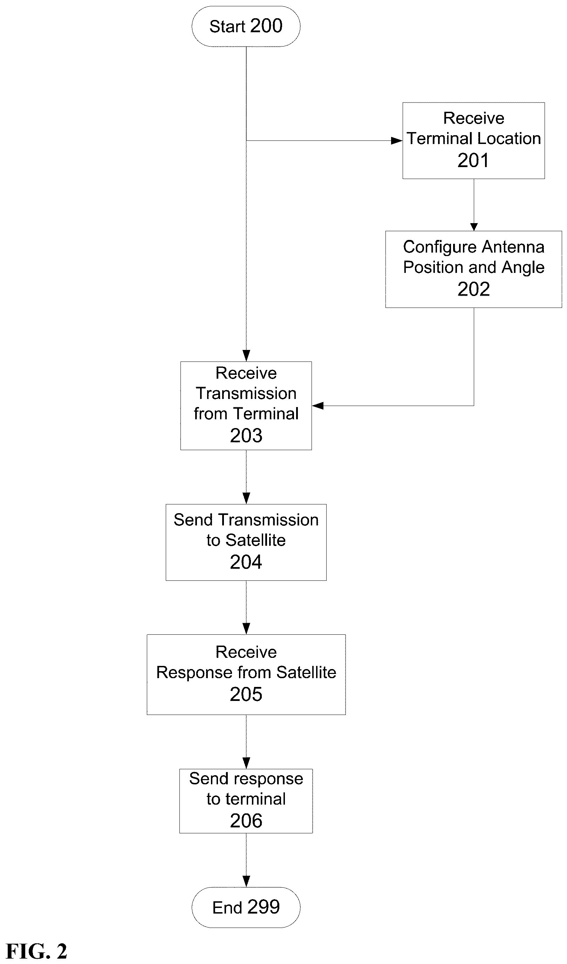

Reference is now made to FIG. 2, which is a flowchart of a method to relay an indoor radio frequency signal transmission to and from a satellite, according to some embodiments of the invention. The method 200 starts with receiving 203 an EM signal transmission from a vehicle antenna connected to a vehicle transceiver. For example, a relay amplifier 101 receives 203 the EM signal 142 transmission using a feedhorn 105. Optionally, the method 200 starts with receiving 201 a vehicle antenna and/or transceiver, as at 132 and 131, location and configuring an indoor antenna's 103 position and/or angle 202. A feedhorn 105 of the indoor antenna 103 is directed at the vehicle and is positioned at or near a line between the vehicle and the geostationary satellite 120. An EM signal 141 is sent 204 to the satellite from the outdoor antenna 107 by the relay amplifier 101, such that the EM signal 141 to the satellite 120 is of the same electromagnetic configuration, such as frequency, polarity, signal strength, and the like as the EM signal 142 received from the vehicle transceiver 131. Similarly, a response is received 205 from the satellite 120 by the relay amplifier 101 and sent 206 to the vehicle terminal system 131. Similarly, the actions of the method could initiate from the satellite 120, as at 205 and 206, with a response from the vehicle terminal 131, as at 203 and 204.

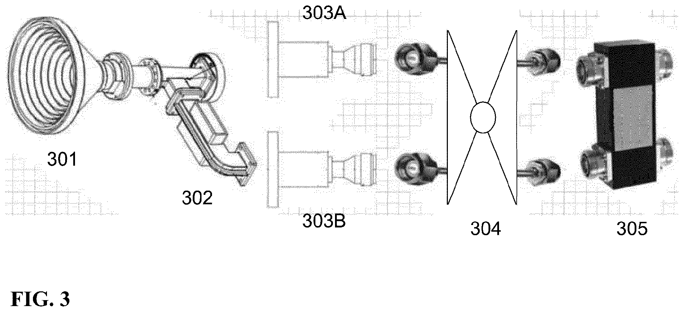

Reference is now made to FIG. 3, which is a schematic illustration of the details of an indoor antenna for indoor satellite communication, according to some embodiments of the invention. The indoor antenna 103 comprises a feedhorn 301 for directionally transmitting and receiving EM signals. For example, the EM signal frequency is in the microwave range. For example, the EM signal frequency is in the Ku-band, with a frequency of 10 gigahertz to 15 gigahertz. The feedhorn 301 is connected to an orthomode transducer 302 that receives the mobile transceiver transmission EM signal 142 and separates two polarizations, such as a horizontal and vertical polarization. One polarization signal may be the transmit signal from the vehicle transceiver and the second polarization signal may be the receive signal to the vehicle transceiver, or alternatively in the reverse polarization. The separate polarized EM signals are converted by adapters, such as electronic circuits, 303A and 303B, to a sine wave voltage signals on electrical conductors allowing flexible electronic connections to transmit the signal to the relay amplifier 101 using coaxial cables. Optionally, an orientation adjuster 304 and 104 allows directing the feedhorn towards a vehicle antenna. Optionally, a hybrid coupler 305 is used on the electronic connections, such that each polarization is split to both the TX and RX channels, allowing the feedhorn to receive both polarizations with a single relay amplifier. For example, the TX signal is horizontally polarized and the hybrid coupler sends this signal to the TX and RX channels of the relay amplifier. In this case, the relay amplifier ignores the TX signal received on the RX channel.

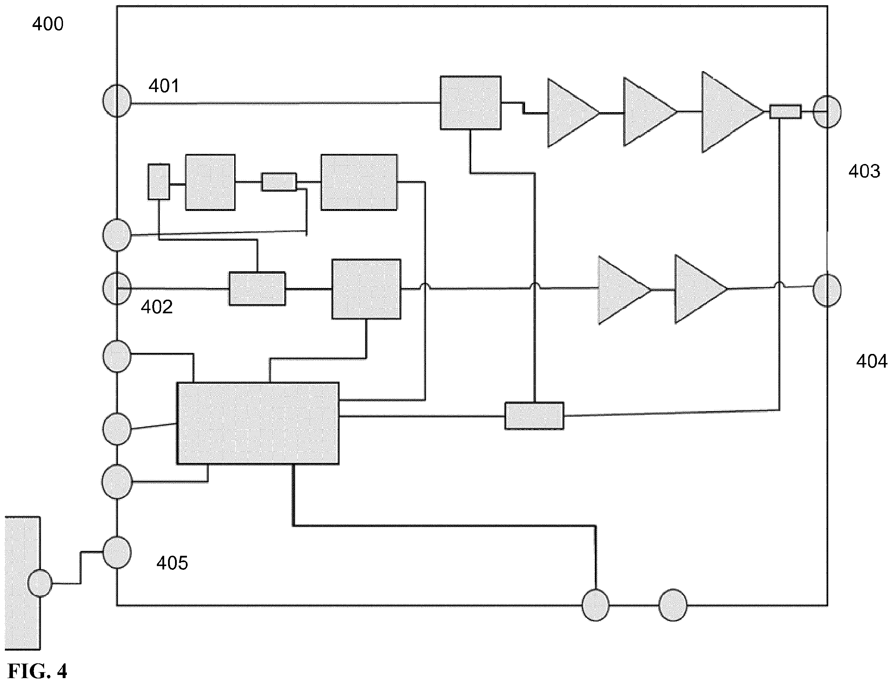

Reference is now made to FIG. 4, which is a schematic illustration of a block diagram details of a relay amplifier for indoor satellite communication, according to some embodiments of the invention. The relay amplifier operates at the same gigahertz frequency range as the EM signals, such as in the range of 10-15 gigahertz frequencies, and amplifies both the RX and TX channels for example to allow the indoor and outdoor antenna losses to be compensated for. The relay amplifier 101 and 400 comprises an EM signal TX path in 401 for receiving an EM signal 142 from the vehicle terminal to the satellite. The EM signal 141 is sent to the outdoor antenna 107 on a TX path out 403 of the relay amplifier 101, and on to the satellite. The EM signal 141 from the satellite is received on the RX path in 402 and sent to the indoor antenna 103 on the RX path out 404. Optionally, a remote access interface 405 allows a computerized terminal 106 to monitor and/or control the relay amplifier 101 and/or system, such as the TX and RX signal strengths or amplification powers. For example, a USB, Wi-Fi, Ethernet, and like interface allows a terminal 106 to access the operational parameters of the relay amplifier 101 to configure the frequency range of electromagnetic signals 142 to monitor using the feedhorn 105 and relay to the satellite 120. For example, the terminal 106 retrieves a log of communication links established by the relay amplifier 101 for billing purposes. For example, the remote terminal 106 is located in the office of the facility manager. For example, the terminal 106 allows powering down the indoor antenna 103, outdoor antenna 107, and or relay amplifier 101 for maintenance. Electronic subunits, such as amplifiers blocks, control boards, and the like, can be selected and placed according to system electronic specifications.

Optionally, the relay amplifier automatically or manually increases the gain of the signal received from the vehicle so that the same signal sent to the satellite from the outdoor antenna is at the same signal strength. For example, the relay amplifier has variable gain and measures the signal strength from the vehicle and from the outdoor antenna, and adjusts the amplification to the correct level so that the two signal strengths are equal. Similarly, the strength of the signal received from the satellite is measured and the amplification is adjusted automatically so that the signal from the feedhorn is of equal strength.

Optionally, one or more mobile transceivers can be included in the system to test the operation of the indoor directional antenna, the outdoor antenna, and/or the relay amplifier. For example, a mobile transceiver is placed at the vehicle location and communication link with the satellite is tested. For example, a mobile modem transceiver is located inside the relay amplifier device and communications with the satellite and/or vehicle transceiver is tested.

Optionally, the indoor directional antenna is an omnidirectional antenna and can receive Ku-band electromagnetic radiation signals from any direction.

Following is a description of an example embodiment. Using a vehicle transceiver system, such as a mobile and/or vehicle Ku-band transceiver, requires a direct view of the satellite for sending and receiving the satellite Ku-band signals. With a Ku-band system according to embodiments of the invention, a terminal transceiver may operate in closed facility saving on time and money of getting the ship or plane out in the open to acquire a line of sight with the satellite.

For example, a Ku-band system relays communication signals between vehicle and/or mobile transceivers and Ku-band geostationary satellites, within closed facilities that have no sky view. Direct vehicle and/or mobile user view of the satellite is essential for establishing initial satellite communication signals prior to the vehicle exiting the closed facilities. This Ku-band system is intended for using and/or testing Ku-band terminal transceivers that are part of vehicles in warehouses, hangers and other closed facilities, such as a ship being repaired in a naval hangar, a new transceiver system installed on an airplane in an airfield hanger, and the like.

The example system comprises an outdoor antenna located in direct line of sight with a geostationary satellite and directed towards the geostationary satellite.

The example system comprises an indoor antenna mounted in a position that simulates the transmissions to the geostationary satellite as seen from a vehicle antenna. The indoor antenna is connected electronically using two coax cables with the relay amplifier unit.

The example system comprises a relay amplifier unit, connected to the two or more antennas, such as one or more indoor antennas and one or more outdoor antennas, and electronically configured to relay signals between the vehicle transceiver and the geostationary satellite. For example, the system may have multiple outdoor antennas to relay signals to more than one geostationary satellite, connected electronically to the relay amplifier with a switch to choose the outdoor antenna to use. For example, the relay amplifier has a signal splitter and/or signal combiner for sending and receiving EM signals with more than one indoor antenna.

The unique indoor antenna is multi polarized, intended to transmit both TX and RX waves to the vehicle transceiver making the installation orientation easier. For example, a hybrid coupler and/or relay amplifier electronic components are used to determine which of two polarization signals a transmission is and which is a reception, and connect the TX and RX signals to the appropriate outdoor antenna polarization signals so that the vehicle transceiver is correctly configured for direct communication with the geostationary satellite. This enables the feedhorn to be used for both TX and RX waves in multiple polarizations.

The customer may install any number of indoor antennas and/or relay amplifier dependent on the number of vehicle transceivers to be relayed simultaneously. For example, an airplane hangar comprises two or more airplane repair locations inside the structure, and for each repair location, there is a separate indoor antenna and relay amplifier 101. For example, an airplane hangar comprises two or more airplane repair locations, and for each repair location, there is a separate indoor antenna and a single relay amplifier that comprises a TX and RX channel for each indoor antenna.

The system is easy to install and manage because the system comprises relatively few components that can be installed by a single technician, and the remote terminal interface allows convenient access to system operational parameters. The user may connect the relay amplifier 101 to any laptop or its own LAN system, to have direct control of the RX and/or TX signal RF gain, monitor satellite signal, and the like.

The system is a low cost system that saves time, costs, and efforts to any entity that requires the use and/or testing of Ku-band vehicle transceiver systems in closed facilities.

The flowchart and block diagrams in the Figures illustrate the architecture, functionality, and operation of possible implementations of systems, methods, and devices according to various embodiments of the present invention. In this regard, each block in the flowchart or block diagrams may represent a module, segment, or portion of code, which comprises one or more executable instructions for implementing the specified logical function(s). It should also be noted that, in some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts, or combinations of special purpose hardware and computer instructions.

The descriptions of the various embodiments of the present invention have been presented for purposes of illustration, but are not intended to be exhaustive or limited to the embodiments disclosed. Many modifications and variations will be apparent to those of ordinary skill in the art without departing from the scope and spirit of the described embodiments. The terminology used herein was chosen to best explain the principles of the embodiments, the practical application or technical improvement over technologies found in the marketplace, or to enable others of ordinary skill in the art to understand the embodiments disclosed herein.

It is expected that during the life of a patent maturing from this application many relevant feedhorns will be developed and the scope of the term feedhorn is intended to include all such new technologies a priori.

It is expected that during the life of a patent maturing from this application many relevant satellite transceivers and signal amplifiers will be developed and the scope of the term vehicle transceiver and/or relay amplifier respectively is intended to include all such new technologies a priori.

As used herein the term "about" refers to ± 10 %.

The terms "comprises", "comprising", "includes", "including", "having" and their conjugates mean "including but not limited to". This term encompasses the terms "consisting of" and "consisting essentially of'.

The phrase "consisting essentially of' means that the composition or method may include additional ingredients and/or steps, but only if the additional ingredients and/or steps do not materially alter the basic and novel characteristics of the claimed composition or method.

As used herein, the singular form "a", "an" and "the" include plural references unless the context clearly dictates otherwise. For example, the term "a compound" or "at least one compound" may include a plurality of compounds, including mixtures thereof.

The word "exemplary" is used herein to mean "serving as an example, instance or illustration". Any embodiment described as "exemplary" is not necessarily to be construed as preferred or advantageous over other embodiments and/or to exclude the incorporation of features from other embodiments.

The word "optionally" is used herein to mean "is provided in some embodiments and not provided in other embodiments". Any particular embodiment of the invention may include a plurality of "optional" features unless such features conflict.

Throughout this application, various embodiments of this invention may be presented in a range format. It should be understood that the description in range format is merely for convenience and brevity and should not be construed as an inflexible limitation on the scope of the invention. Accordingly, the description of a range should be considered to have specifically disclosed all the possible subranges as well as individual numerical values within that range. For example, description of a range such as from 1 to 6 should be considered to have specifically disclosed subranges such as from 1 to 3, from 1 to 4, from 1 to 5, from 2 to 4, from 2 to 6, from 3 to 6 etc., as well as individual numbers within that range, for example, 1, 2, 3, 4, 5, and 6. This applies regardless of the breadth of the range.

Whenever a numerical range is indicated herein, it is meant to include any cited numeral (fractional or integral) within the indicated range. The phrases "ranging/ranges between" a first indicate number and a second indicate number and "ranging/ranges from" a first indicate number "to" a second indicate number are used herein interchangeably and are meant to include the first and second indicated numbers and all the fractional and integral numerals therebetween.

It is appreciated that certain features of the invention, which are, for clarity, described in the context of separate embodiments, may also be provided in combination in a single embodiment. Conversely, various features of the invention, which are, for brevity, described in the context of a single embodiment, may also be provided separately or in any suitable subcombination or as suitable in any other described embodiment of the invention. Certain features described in the context of various embodiments are not to be considered essential features of those embodiments, unless the embodiment is inoperative without those elements.

## Claims

1. A system for obstructed satellite communication, comprising:
an outdoor satellite antenna (107) adapted to be positioned and oriented to have a direct satellite view with a geosynchronous satellite and to receive and transmit an electromagnetic satellite signal from/to the geosynchronous satellite, wherein said outdoor satellite antenna is directed towards said geosynchronous satellite along a line of sight;
at least one directional antenna (103) adapted to be positioned inside an obstructing structure and receive and transmit an obstructed electromagnetic signal, wherein said at least one directional antenna comprises a feedhorn;
position and/or orientation adjusters (102) (104) adapted to move the feedhorn of said at least one directional antenna (103) toward a vehicle antenna (132) within the obstructing structure to be parallel to
said line of sight; and
a relay amplifier device (101) adapted to send and receive said electromagnetic satellite signal and said obstructed electromagnetic signal between respective said outdoor satellite antenna and said at least one directional antenna;
wherein said electromagnetic satellite signal and said obstructed electromagnetic signal have the same frequency;
wherein said obstructing structure prevents said electromagnetic satellite signal from being received at an obstructed location within the obstructing structure and prevents said obstructed electromagnetic signal originating at said obstructed location from being received by said geosynchronous satellite.

2. The system of claim 1, wherein said at least one directional antenna comprises a plurality of antennas positioned in an array, and a signal splitter electronic device electronically connects said plurality of antennas to said relay amplifier device.

3. The system of claim 1, wherein said at least one directional antenna comprises a plurality of antennas positioned in an array, and a signal combiner electronic device electronically connects said plurality of antennas to said relay amplifier device.

4. The system of claim 1, wherein said feedhorn is attached to an orienting base and said orienting base modifies an orientation of said feedhorn to direct said feedhorn towards location on a far side of said obstructing structure away from said geosynchronous satellite.

5. The system of claim 1, wherein said at least one directional antenna is attached to a positioning subunit, and said positioning subunit modifies a location of said at least one directional antenna to a position between a mobile satellite transceiver terminal and said geosynchronous satellite.

6. The system of claim 1, wherein said obstructed electromagnetic signal comprises a transmission signal polarized horizontally and a reception signal polarized vertically, and said relay amplifier transmits and receives said electromagnetic satellite signal with a same polarization.

7. The system of claim 1, wherein said obstructed electromagnetic signal comprises a transmission signal polarized vertically and a reception signal polarized horizontally, and said relay amplifier transmits and receives said electromagnetic satellite signal with a same polarization.

8. The system of claim 1, wherein said at least one directional antenna receives any polarization using a hybrid coupler, and said any polarization is electronically oriented to match a steerable antenna of a mobile satellite transceiver terminal.

9. The system of claim 1, wherein said frequency is a Ku-band frequency in the range of 10-15 gigahertz portion of the electromagnetic spectrum and in the microwave range of frequencies.

10. The system of claim 1, further comprising a testing transceiver for testing system operation by establishing a communication link using at least one component of said system, wherein said communication link is between said testing transceiver and said geosynchronous satellite or between said testing transceiver and a second transceiver located at said obstructed location.

11. The system of claim 1, wherein said relay amplifier has at least one of a configurable gain for each channel and an automatically adjusted gain for each channel so that said electromagnetic satellite signal has a same signal strength as said obstructed electromagnetic signal.

12. The system of claim 1, further comprising
an orthomode transducer (302) connected to said feedhorn for receiving a bidirectional electromagnetic radiation signal from the vehicle.

13. The system of claim 12, wherein said bidirectional electromagnetic radiation signal comprises at least one of: (1) a horizontally polarized transmission signal and a vertically polarized reception signal and (2) a vertically polarized transmission signal and a horizontally polarized reception signal.

14. A method for using a system for obstructed satellite communication for obstructed satellite communication, comprising:
receiving and transmitting by an outdoor satellite antenna (107) adapted to be positioned and oriented to have a direct satellite view with a geosynchronous satellite an electromagnetic satellite signal from/to the geosynchronous satellite, wherein said outdoor satellite antenna is directed towards said geosynchronous satellite along a line of sight;
moving by position and/or orientation adjusters (102) (104) at least a feedhorn of at least one directional antenna (103) positioned inside said obstructing structure toward a vehicle antenna (132) within an obstructing structure to be parallel to said line of sight; receiving and transmitting an obstructed electromagnetic signal by said at least one directional antenna (103);
sending and receiving said electromagnetic satellite signal and said obstructed electromagnetic signal between respective said outdoor satellite antenna and said at least one directional antenna by a relay amplifier device (101);
wherein said electromagnetic satellite signal and said obstructed electromagnetic signal have the same frequency;
wherein said obstructing structure prevents said electromagnetic satellite signal from being received at an obstructed location within the obstructing structure and prevents said obstructed electromagnetic signal originating at said obstructed location from being received by said geosynchronous satellite.

## Patentansprüche

1. System für behinderte Satellitenkommunikation, umfassend:
eine Außen-Satellitenantenne (107), die ausgelegt ist, um so positioniert und orientiert zu werden, dass sie eine direkte Satellitenansicht mit einem geosynchronen Satelliten aufweist und ein elektromagnetisches Satellitensignal vom geosynchronen Satelliten empfängt und an denselben sendet, wobei die Außen-Satellitenantenne entlang einer Sichtlinie zum geosynchronen Satelliten gerichtet ist;
mindestens eine Richtantenne (103), die ausgelegt ist, um innerhalb einer Behinderungsstruktur positioniert zu werden und ein behindertes elektromagnetisches Signal zu empfangen und zu senden, wobei die mindestens eine Richtantenne einen Hornstrahler umfasst;
Stellungs- und Orientierungsjustierer (102)(104), die so ausgelegt sind, dass sie den Hornstrahler der mindestens einen Richtantenne (103) zu einer Fahrzeugantenne (132) innerhalb der Behinderungsstruktur bewegen, damit er parallel zur Sichtlinie ist; und
eine Relaisverstärkervorrichtung (101), die zum Senden und Empfangen des elektromagnetischen Satellitensignals und des behinderten elektromagnetischen Signals zwischen der Außen-Satellitenantenne bzw. der mindestens einen Richtantenne ausgelegt ist;
wobei das elektromagnetische Satellitensignal und das behinderte elektromagnetische Signal die gleiche Frequenz aufweisen;
wobei die Behinderungsstruktur verhindert, dass das elektromagnetische Satellitensignal in einer behinderten Position innerhalb der Behinderungsstruktur empfangen wird, und verhindert, dass das behinderte elektromagnetische Signal, das in der behinderten Position entsteht, durch den geosynchronen Satelliten empfangen wird.

2. System nach Anspruch 1, wobei die mindestens eine Richtantenne eine Mehrzahl von Antennen in einer Gruppe positioniert umfasst, und eine elektronische Signalteilervorrichtung die Mehrzahl von Antennen elektronisch mit der Relaisverstärkervorrichtung verbindet.

3. System nach Anspruch 1, wobei die mindestens eine Richtantenne eine Mehrzahl von Antennen in einer Gruppe positioniert umfasst, und eine elektronische Signalkombinierervorrichtung die Mehrzahl von Antennen elektronisch mit der Relaisverstärkervorrichtung verbindet.

4. System nach Anspruch 1, wobei der Hornstrahler an einer Orientierungsbasis angebracht ist, und die Orientierungsbasis eine Orientierung des Hornstrahlers modifiziert, um den Hornstrahler zur Position auf einer entfernten Seite der Behinderungsstruktur vom geosynchronen Satelliten weg zu richten.

5. System nach Anspruch 1, wobei die mindestens eine Richtantenne an einer Positionierungs-Untereinheit angebracht ist, und die Positionierungs-Untereinheit eine Position der mindestens einen Richtantenne in eine Stellung zwischen einem mobilen Satelliten-Sendeempfängerendgerät und dem geosynchronen Satelliten wechselt.

6. System nach Anspruch 1, wobei das behinderte elektromagnetische Signal ein Sendesignal, das horizontal polarisiert ist, und ein Empfangssignal umfasst, das vertikal polarisiert ist, und der Relaisverstärker das elektromagnetische Satellitensignal mit einer gleichen Polarisation sendet und empfängt.

7. System nach Anspruch 1, wobei das behinderte elektromagnetische Signal ein Sendesignal, das vertikal polarisiert ist, und ein Empfangssignal umfasst, das horizontal polarisiert ist, und der Relaisverstärker das elektromagnetische Satellitensignal mit einer gleichen Polarisation sendet und empfängt.

8. System nach Anspruch 1, wobei die mindestens eine Richtantenne jede Polarisation unter Verwendung eines Hybridkopplers empfängt, und die jede Polarisation elektronisch so orientiert ist, dass sie einer schwenkbaren Antenne eines mobilen Satelliten-Sendeempfängerendgeräts entspricht.

9. System nach Anspruch 1, wobei die Frequenz eine Ku-Band-Frequenz im Bereich des Abschnitts von 10 bis 15 Gigahertz des elektromagnetischen Spektrums und im Mikrowellenbereich von Frequenzen ist.

10. System nach Anspruch 1, ferner umfassend einen Test-Sendeempfänger zum Testen des Systembetriebs durch Herstellen einer Kommunikationsverbindung unter Verwendung mindestens einer Komponente des Systems, wobei die Kommunikationsverbindung zwischen dem Test-Sendeempfänger und dem geosynchronen Satelliten oder zwischen dem Test-Sendeempfänger und einem zweiten Sendeempfänger ist, der sich in einer behinderten Position befindet.

11. System nach Anspruch 1, wobei der Relaisverstärker mindestens eine von einer konfigurierbaren Verstärkung und einer automatisch eingestellten Verstärkung für jeden Kanal aufweist, so dass das elektromagnetische Satellitensignal eine gleiche Signalstärke wie das behinderte elektromagnetische Signal aufweist.

12. System nach Anspruch 1, ferner umfassend:
eine Polarisationsweiche (302), der mit dem Hornstrahler verbunden ist, zum Empfangen eines bidirektionalen elektromagnetischen Strahlungssignals vom Fahrzeug.

13. System nach Anspruch 12, wobei das bidirektionale elektromagnetische Strahlungssignal mindestens eines umfasst von: (1) einem horizontal polarisierten Sendesignal und einem vertikal polarisierten Empfangssignal und (2) einem vertikal polarisierten Sendesignal und einem horizontal polarisierten Empfangssignal.

14. Verfahren zur Verwendung eines Systems für behinderte Satellitenkommunikation für behinderte Satellitenkommunikation, umfassend:
Empfangen und Senden durch eine Außen-Satellitenantenne (107), die ausgelegt ist, um so positioniert und orientiert zu werden, dass sie eine direkte Satellitenansicht mit einem geosynchronen Satelliten aufweist, eines elektromagnetischen Satellitensignals von dem bzw. an den geosynchronen Satelliten, wobei die Außen-Satellitenantenne entlang einer Sichtlinie zum geosynchronen Satelliten gerichtet ist;
Bewegen durch Stellungs- und Orientierungsjustierer (102)(104) mindestens eines Hornstrahlers mindestens einer Richtantenne (103), die innerhalb der Behinderungsstruktur positioniert ist, zu einer Fahrzeugantenne (132) innerhalb einer Behinderungsstruktur, damit er parallel zur Sichtlinie ist; und
Empfangen und Senden eines behinderten elektromagnetischen Signals durch die mindestens eine Richtantenne (103);
Senden und Empfangen des elektromagnetischen Satellitensignals und des behinderten elektromagnetischen Signals zwischen der Außen-Satellitenantenne bzw. der mindestens einen Richtantenne durch eine Relaisverstärkervorrichtung (101);
wobei das elektromagnetische Satellitensignal und das behinderte elektromagnetische Signal die gleiche Frequenz aufweisen;
wobei die Behinderungsstruktur verhindert, dass das elektromagnetische Satellitensignal in einer behinderten Position innerhalb der Behinderungsstruktur empfangen wird, und verhindert, dass das behinderte elektromagnetische Signal, das in der behinderten Position entsteht, durch den geosynchronen Satelliten empfangen wird.

## Revendications

1. Système pour une communication par satellite obstruée, comprenant :
une antenne satellite extérieure (107) apte à être positionnée et orientée de manière à présenter une vue satellite directe avec un satellite géosynchrone, et à recevoir et transmettre un signal satellite électromagnétique en provenance / à destination du satellite géosynchrone, dans lequel ladite antenne satellite extérieure est dirigée vers ledit satellite géosynchrone le long d'une ligne de visée ;
au moins une antenne directive (103) apte à être positionnée à l'intérieur d'une structure obstruante et à recevoir et transmettre un signal électromagnétique obstrué, dans lequel ladite au moins une antenne directive comprend un cornet d'alimentation ;
des régleurs de position et/ou orientation (102) (104) aptes à déplacer le cornet d'alimentation de ladite au moins une antenne directive (103) vers une antenne de véhicule (132) au sein de la structure obstruante devant être parallèle à ladite ligne de visée ; et
un dispositif amplificateur de relais (101) apte à envoyer et à recevoir ledit signal satellite électromagnétique et ledit signal électromagnétique obstrué entre ladite antenne satellite extérieure respective et ladite au moins une antenne directive ;
dans lequel ledit signal satellite électromagnétique et ledit signal électromagnétique obstrué présentent la même fréquence ;
dans lequel ladite structure obstruante empêche la réception dudit signal satellite électromagnétique au niveau d'un emplacement obstrué au sein de la structure obstruante, et empêche que ledit signal électromagnétique obstrué provenant dudit emplacement obstrué ne soit reçu par ledit satellite géosynchrone.

2. Système selon la revendication 1, dans lequel ladite au moins une antenne directive comprend une pluralité d'antennes positionnée dans un réseau, et dans lequel un dispositif électronique séparateur de signaux connecte par voie électronique ladite pluralité d'antennes audit dispositif amplificateur de relais.

3. Système selon la revendication 1, dans lequel ladite au moins une antenne directive comprend une pluralité d'antennes positionnée dans un réseau, et dans lequel un dispositif électronique combineur de signaux connecte par voie électronique ladite pluralité d'antennes audit dispositif amplificateur de relais.

4. Système selon la revendication 1, dans lequel ledit cornet d'alimentation est fixé à une base d'orientation et ladite base d'orientation modifie l'orientation dudit cornet d'alimentation en vue de diriger ledit cornet d'alimentation vers l'emplacement sur un côté éloigné de ladite structure obstruante à distance dudit satellite géosynchrone.

5. Système selon la revendication 1, dans lequel ladite au moins une antenne directive est fixée à une sous-unité de positionnement, et ladite sous-unité de positionnement modifie un emplacement de ladite au moins une antenne directive au niveau d'une position entre un terminal émetteur-récepteur satellite mobile et ledit satellite géosynchrone.

6. Système selon la revendication 1, dans lequel ledit signal électromagnétique obstrué comprend un signal de transmission à polarisation horizontale et un signal de réception à polarisation verticale, et ledit amplificateur de relais transmet et reçoit ledit signal satellite électromagnétique avec une même polarisation.

7. Système selon la revendication 1, dans lequel ledit signal électromagnétique obstrué comprend un signal de transmission à polarisation verticale et un signal de réception à polarisation horizontale, et ledit amplificateur de relais transmet et reçoit ledit signal satellite électromagnétique avec une même polarisation.

8. Système selon la revendication 1, dans lequel ladite au moins une antenne directive reçoit une quelconque polarisation en utilisant un coupleur hybride, et ladite une quelconque polarisation est orientée électroniquement de manière à correspondre à une antenne orientable d'un terminal émetteur-récepteur satellite mobile.

9. Système selon la revendication 1, dans lequel ladite fréquence correspond à une fréquence de bande Ku dans la plage de la partie de 10 à 15 gigahertz du spectre électromagnétique, et dans la plage de fréquences microonde.

10. Système selon la revendication 1, comprenant en outre un émetteur-récepteur de test destiné à tester un fonctionnement du système en établissant une liaison de communication en faisant appel à au moins un composant dudit système, dans lequel ladite liaison de communication est entre ledit émetteur-récepteur de test et ledit satellite géosynchrone, ou entre ledit émetteur-récepteur de test et un second émetteur-récepteur situé au niveau dudit emplacement obstrué.

11. Système selon la revendication 1, dans lequel ledit amplificateur de relais présente au moins l'un parmi un gain configurable pour chaque canal et un gain réglé automatiquement pour chaque canal, de sorte que ledit signal satellite électromagnétique présente une intensité de signal identique à celle dudit signal électromagnétique obstrué.

12. Système selon la revendication 1, comprenant en outre :
un transducteur orthomode (302) connecté audit cornet d'alimentation en vue de recevoir un signal de rayonnement électromagnétique bidirectionnel en provenance du véhicule.

13. Système selon la revendication 12, dans lequel ledit signal de rayonnement électromagnétique bidirectionnel comprend au moins l'un parmi : (1) un signal de transmission à polarisation horizontale et un signal de réception à polarisation verticale, et (2) un signal de transmission à polarisation verticale et un signal de réception à polarisation horizontale.

14. Procédé d'utilisation d'un système pour une communication par satellite obstruée, comprenant les étapes ci-dessous consistant à :
recevoir et transmettre, par le biais d'une antenne satellite extérieure (107) apte à être positionnée et orientée de manière à présenter une vue satellite directe avec un satellite géosynchrone, un signal satellite électromagnétique en provenance / à destination du satellite géosynchrone, dans lequel ladite antenne satellite extérieure est dirigée vers ledit satellite géosynchrone le long d'une ligne de visée ;
déplacer, par le biais de régleurs de position et/ou orientation (102) (104), au moins un cornet d'alimentation d'au moins une antenne directive (103) positionnée à l'intérieur de ladite structure obstruante vers une antenne de véhicule (132) dans une structure obstruante devant être parallèle à ladite ligne de visée ;
recevoir et transmettre un signal électromagnétique obstrué par le biais de ladite au moins une antenne directive (103) ;
envoyer et recevoir ledit signal satellite électromagnétique et ledit signal électromagnétique obstrué entre ladite antenne satellite extérieure respective et ladite au moins une antenne directive, par le bais d'un dispositif amplificateur de relais (101) ;
dans lequel ledit signal satellite électromagnétique et ledit signal électromagnétique obstrué présentent la même fréquence ;
dans lequel ladite structure obstruante empêche la réception dudit signal satellite électromagnétique au niveau d'un emplacement obstrué au sein de la structure obstruante, et empêche que ledit signal électromagnétique obstrué provenant dudit emplacement obstrué ne soit reçu par ledit satellite géosynchrone.
